# EUROPÄISCHE PATENTSCHRIFT

(11) **EP 0 209 014 B1**
(45) Veröffentlichungstag und Bekanntmachung des Hinweises auf die Patenterteilung: **19.05.1993**
(21) Anmeldenummer: 86109135.3
(22) Anmeldetag: 04.07.1986
(51) Int. Cl.: G06F 7/50

(54) **Anordnung mit einem sättigbaren Carry-Save-Addierer**
Arrangement having a saturable carry-save adder
Dispositif ayant un additionneur à réservation de retenue saturable

(30) Priorität: 12.07.1985 DE 3524981
(43) Veröffentlichungstag der Anmeldung: 21.01.1987
(73) Patentinhaber: SIEMENS AKTIENGESELLSCHAFT, 80333 München (DE)
(72) Erfinder: Noll, Tobias, Dipl.-Ing., D-7441 Neckartailfingen (DE); Ulbrich, Walter, Dr.-Ing., D-8039 Puchheim (DE)

(56) Entgegenhaltungen:
- EP-A- 0 029 706
- US-A- 3 290 493
- US-A- 4 104 729
- PROCEEDINGS OF THE IEEE, Band 63, Nr. 4, April 1975, Seiten 633-648, New York, US; S.L. FREENY: "Special purpose hardware for digital filtering"
- K. HWANG: "Computer arithmetic", 1979, Seiten 98-103, John Wiley & Sons, New York, US

## Beschreibung

Die Erfindung bezieht sich auf eine Anordnung mit einem Carry-Save-Addierer zur bitparallelen Addition von Binärzahlen im Zweierkomplement nach dem Oberbegriff des Patentanspruchs 1.

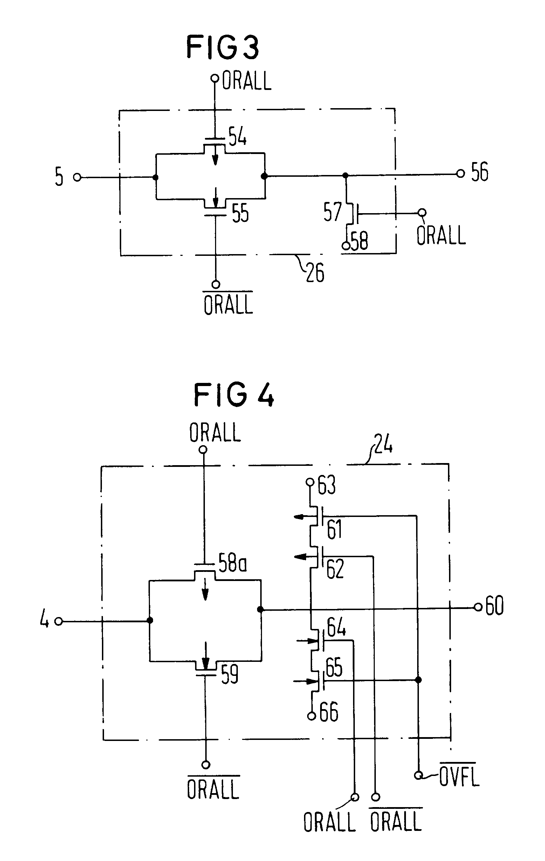

Ein Carry-Save-Addierer dieser Art ist aus dem Buch "Computer Arithmetic" von K.Hwang, Verlag John Wiley & Sons, New York, 1979, S. 98-103, insbesondere Fig. 4.2, bekannt. Hierbei weist jeder erste Addierer drei Eingänge auf, die jeweils mit gleichwertigen Bits dreier miteinander zu addierender Binärzahlen belegt sind. Die Summenausgänge der ersten Addierer sind an erste Eingänge der Addiereinrichtung geführt, die Übertragsausgänge der ersten Addierer (mit Ausnahme des höchstwertigen Addierers) an zweite Eingänge der Addiereinrichtung. An den Ausgängen der letzteren erscheint ein Summenwort als Ergebnis der Addition. Zum Unterschied von einer Addiereranordnung mit Übertragsdurchlauf ("Carry-Propagate"-Prinzip) werden hier die Überträge aller ersten Addierer bei einer Addition von drei Binärzahlen gleichzeitig gebildet und stehen als Übertragswort neben dem an den ersten Addierern abgegriffenen Zwischensummenwort für eine Addition in der Addiereinrichtung zur Verfügung. Ein in dieser Weise aufgebauter Addierer arbeitet nach dem sog. "Carry-Save"-Prinzip.

Wird hierbei eine binäre Zahl den dritten Eingängen der ersten Addierer extern zugeführt, während an den ersten beiden Eingängen ein durch eine vorhergehende Addition erreichtes erstes Zwischenergebnis anliegt, das aus einem den ersten Eingängen zugeführten Zwischensummenwort und einem den zweiten Eingängen zugeführten Übertragswort besteht, so ergibt sich an den Ausgängen der ersten Addierer ein durch Addition des ersten Zwischenergebnisses und dieser Zahl gebildetes zweites Zwischenergebnis.

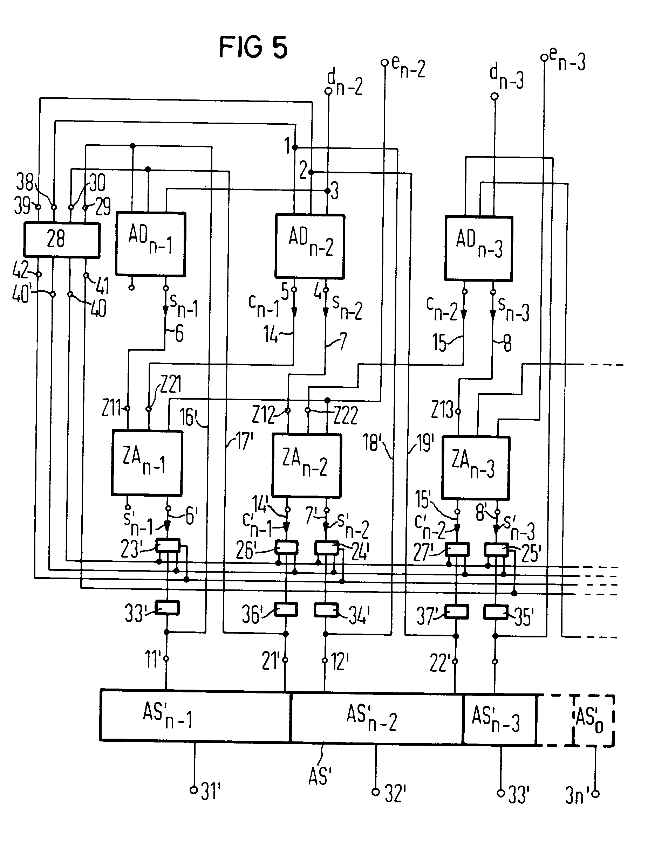

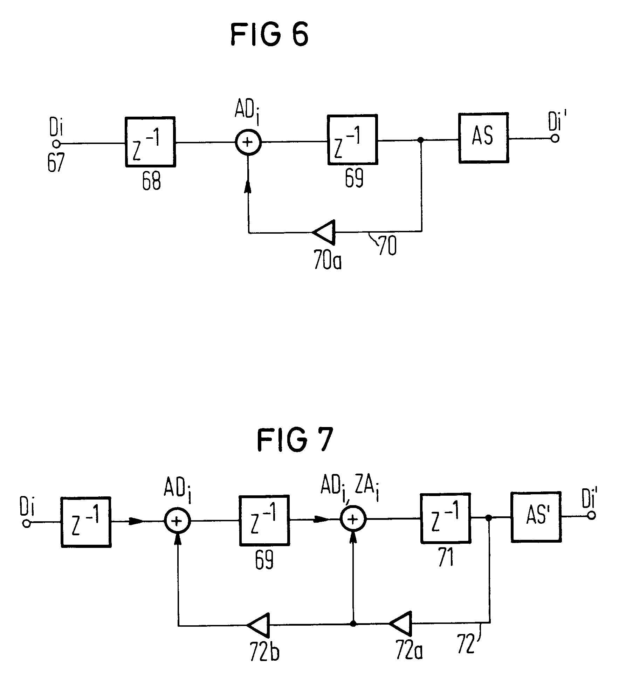

Bei einer fortlaufenden Bildung immer neuer Zwischenergebnisse, die bei einer fortlaufenden Zuführung weiterer binärer Zahlen über die dritten Eingänge erhalten werden, spricht man auch von einer Akkumulation dieser Zahlen. Es kann nun ein Überlauf des Summenworts auftreten, der dadurch gekennzeichnet ist, daß der zulässige Addiererinhalt, der von der vorgegebenen Anzahl der ersten Addierer abhängt, für positive oder negative Inhalte überschritten oder unterschritten wird. Ein solcher Überlauf bedeutet beim Einsatz eines Carry-Save-Addierers in rekursiven Schaltungen oftmals, daß sich der Addiererinhalt periodisch zwischen zwei Grenzwerten zu verändern beginnt, wobei das sich fortlaufend ändernde Summenwort am Ausgang der Addiereinrichtung einer analogen Schwingung entspricht. Hinweise auf ein solches Verhalten eines Addierers in einer rekursiven Schaltung sind den Proc. of the IEEE, Vol. 63, No. 4, April 1975, S. 633-648, vgl. insbesondere Figuren 5 und 6 und zugehöriger Text auf Seite 636, zu entnehmen.

Aufgabe der vorliegenden Erfindung ist es, eine Anordnung der eingangs genannten Art anzugeben, bei der ein Überlauf des aufgelaufenen Summenworts sicher vermieden wird. Das wird erfindungsgemäß durch eine Ausbildung nach dem kennzeichnenden Teil des Patentanspruchs 1 erreicht.

Der mit der Erfindung erzielbare Vorteil besteht insbesondere darin, daß Zwischensummen- bzw. Übertragsworte, die zu einem Überlauf des Summenworts führen können, unmittelbar zur Erkennung einer Überlaufsituation und zu deren Beseitung herangezogen werden. Hierdurch werden unkontrollierte Schwankungen des Summmenworts ausgeschaltet.

Die Ansprüche 2 bis 16 sind auf bevorzugte Weiterbildungen der Erfindung gerichtet.

Die Erfindung wird nachfolgend anhand von in der Zeichnung dargestellten, bevorzugten Ausführungbeispielen näher erläutert. Dabei zeigt:
- Fig. 1: eine nach der Erfindung ausgebildete Anordnung mit einem Carry-Save-Addierer zur bitparallelen Addition von drei Binärzahlen,
- Fig. 2: ein Schaltungsbeispiel einer ersten Teilschaltung nach Fig. 1,
- Fig. 3: ein Schaltungsbeispiel einer zweiten Teilschaltung nach Fig. 1,
- Fig. 4: ein Schaltungsbeispiel einer dritten Teilschaltung nach Fig. 1,
- Fig. 5: eine erfindungsgemäße Anordnung mit einem Carry-Save-Addierer zur bitparallelen Addition von vier Binärzahlen,
- Fig. 6: ein Anwendungsbeispiel für eine Anordnung nach Fig. 1 und
- Fig. 7: ein Anwendungsbeispiel für eine Anordnung nach Fig. 5.

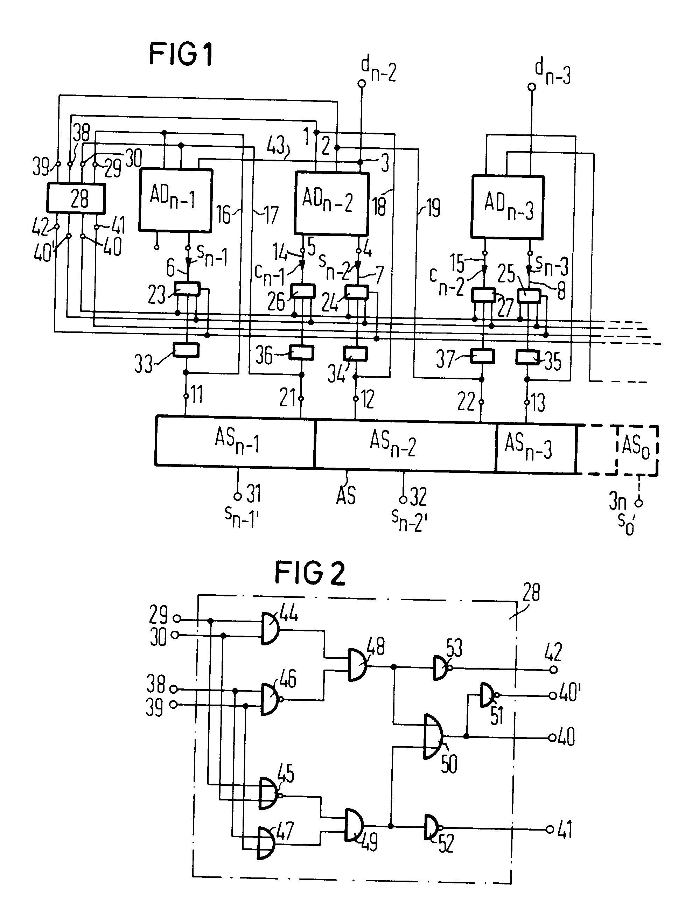

In Fig. 1 sind drei Addierer ADₙ₋₁, ADₙ₋₂ und ADₙ₋₃ dargestellt, die jeweils drei Eingänge, z.B. 1 bis 3, für gleichwertige Bits dreier miteinander zu addierender, im Zweierkomplement dargestellter Binärzahlen, einen Summenausgang, z.B. 4, und einen Übertragsausgang, z.B. 5, aufweisen. Zur Addition von n-stelligen Binärzahlen ergänzt man die Fig. 1 durch weitere Addierer ADₙ₋₄ ... AD_{O}, die den dargestellten nach Aufbau und Wirkungsweise entsprechen. Die Summenausgänge der Addierer ADᵢ sind mit Ausgangsleitungen z.B. 6 bis 8, beschaltet, die an erste Eingänge 11, 12, 13 ... einer Addiereinrichtung AS geführt sind. Die Übertragsausgänge der Addierer ADᵢ mit Ausnahme von ADₙ₋₁ sind mit Ausgangsleitungen 14, 15 .. beschaltet, die jeweils mit zweiten Eingängen 21, 22 ... von AS verbunden sind. Die Addiereinrichtung AS weist Ausgänge 31, 32 ... 3n auf. AS besteht z.B. aus n Addierern ASₙ₋₁ ... AS_{O}, die jeweils drei Eingänge und einen Ausgang besitzen. Die ersten beiden Eingänge von ASₙ₋₁ entsprechen dabei den Eingängen 11 und 21 von AS, der Ausgang von ASₙ₋₁ dem Ausgang 31 von AS. ASₙ₋₂ besitzt zwei Eingänge 12, 22 und den Ausgang 32 usw.. Der nicht dargestellte dritte Eingang von ASₙ₋₁ ist mit dem Übertragsausgang von ASₙ₋₂ verbunden, der nicht dargestellte dritte Eingang von ASₙ₋₂ mit dem Übertragsausgang von ASₙ₋₃ usw..

Ein rekursiver Schaltungszweig 16 verbindet die am Summenausgang von ADₙ₋₁ angeschlossene Ausgangsleitung 6 mit dem ersten Eingang dieses Addierers. Ein zweiter rekursiver Schaltungszweig 17 verbindet die am Übertragsausgang 5 von ADₙ₋₂ angeschlossene Ausgangsleitung 14 mit dem zweiten Eingang von ADₙ₋₁. In entsprechender Weise sind rekursive Schaltungszweige 18, 19 an die ersten beiden Eingänge 1, 2 von ADₙ₋₂ geführt, sowie jeweils weitere rekursive Schaltungszweige an die ersten beiden Eingänge der übrigen Addierer ADᵢ. In die Ausgangsleitungen 6 bis 8 sind jeweils Logikschaltungen 23 bis 25 eingefügt, in die Ausgangsleitungen 14 und 15 weitere Logikschaltungen 26 und 27. Weiterhin sind in die Ausgangsleitungen 6 bis 8, 14 und 15 jeweils Zwischenspeicher, insbesondere Schieberegister, 33 bis 37 eingefügt. Die rekursiven Schaltungszweige, z.B. 16, 17, sind an die zugehörigen Ausgangsleitungen, z.B. 6, 14, so angeschlossen, daß die Anschlußpunkte ausgangsseitig von den Logikschaltungen 23 bis 27 und den Zwischenspeichern 33 bis 37 liegen.

Ein Dekoder 28 weist vier Eingänge 29, 30, 38 und 39 auf, von denen 29 und 30 mit den beiden ersten Eingängen von ADₙ₋₁ und 38 und 39 mit den beiden ersten Eingängen von ADₙ₋₂ verbunden sind. Ausgänge 40 und 40' von 28 sind mit Eingängen sämtlicher Logikschaltungen, z.B. 23 bis 27, beschaltet. Ein Ausgang 41 von 28 ist an die Eingänge einiger Logikschaltungen, z.B. 25, geführt, die den Summenausgängen der Addierer ADᵢ nachgeordnet sind, während ein Ausgang 42 an die Eingänge der übrigen Logikschaltungen, z.B. 23 und 24, geführt ist, die den Summenausgängen von ADᵢ nachgeordnet sind.

An die dritten Eingänge von ADᵢ wird nun eine (n-1)-stellige, im Zweierkomplement dargestellte, binäre Zahl D mit den Bits dₙ₋₂, dₙ₋₃ ... d_{O} gelegt, wobei das höchstwertige Bit dₙ₋₂ wegen der Verbindung 43 den dritten Eingängen von ADₙ₋₁ und ADₙ₋₂ zugeführt wird. Die Zahl D ist damit durch Verdoppelung ihres Vorzeichenbits zu einer n-stelligen Zahl ergänzt. Läßt man die Logikschaltungen 23 bis 27 außer Betracht, so treten die Bits dₙ₋₂, dₙ₋₃ ... nach Durchführung einer bitparallelen Addition in den Addierern ADᵢ auch an den Summenausgängen derselben auf, wobei sie in die Zwischenspeicher 33 bis 35 eingeschrieben werden. Mit einem Taktimpuls werden diese Bits dann über die rekursiven Schaltungszweige 16, 18 ... an die ersten Eingänge, z.B. 1, von ADᵢ durchgeschaltet, während gleichzeitig eine neue binäre Zahl D1 an die dritten Eingänge von ADᵢ gelegt wird. Nach Durchführung einer Addition erhält man ein der Summe von D+D1 entsprechendes erstes Zwischenergebnis in Form eines Zwischensummenwortes an den Summenausgängen und eines Übertragswortes an den Übertragsausgängen von ADᵢ. Die Bits des Zwischensummenwortes werden in die Zwischenspeicher 33, 34 ... eingeschrieben, die Bits des Übertragsworts in die Zwischenspeicher 36, 37... Beim Auftreten eines weiteren Taktimpulses werden dann die Bits des Zwischensummenwortes an die ersten Eingänge von ADᵢ durchgeschaltet, die Bits des Übertragswortes an die zweiten Eingänge, wobei eine weitere binäre Zahl D2 an die dritten Eingänge von ADᵢ angelegt wird. Nach Durchführung einer sich anschließenden Addition steht an den Ausgängen von ADᵢ ein zweites Zwischenergebnis zur Verfügung, das der Summe aus D+D1+D2 entspricht und in die Zwischenspeicher 33 bis 37 eingeschrieben wird. Mit jedem weiteren Taktimpuls wird dann eine neue Zahl Di an die dritten Eingänge angelegt und nach einem Additionsschritt ein neues Zwischenergebnis erhalten, das aus der Summe des vorher aufgelaufenen Zwischenergebnisses und der jeweiligen Zahl Di besteht.

Die Zwischenergebnisse, die jeweils in Form eines Zwischensummenwortes S mit den Bits sₙ₋₁, sₙ₋₂ ... an den Eingängen 11, 12, 13 ... und eines Übertragswortes C mit den Bits cₙ₋₁, cₙ₋₂ ... an den Eingängen 21, 22 ... von AS vorliegen, werden in AS zu Summenworten S' mit den Bits sₙ₋₁', sₙ₋₂' ...s_{O}' zusammengefaßt, die an den Ausgängen 31, 32 ... 3n auftreten. Eine nach Fig. 1 aufgebaute und in dieser Weise betriebene Anordnung bezeichnet man auch als Akkumulator, ihr Ausgangssignal S' als das jeweils aufgelaufene Akkumulatorwort, das den jeweiligen Akkumulatorinhalt kennzeichnet.

Für den Fall, daß bei einem Akkumulator nach Fig. 1 mit n = 5 an die ersten Eingänge von ADᵢ ein im Zweierkomplement dargestelltes Zwischensummenwort S = 01110, an die zweiten Eingänge ein Übertragswort C = 0111 und an die dritten Eingänge eine Binärzahl D = 00011 gelegt werden, ergibt sich hieraus nach Durchführung einer bitparallelen Addition ein neues Zwischensummenwort S1 = 00011 und ein neues Übertragswort C1 = 1110. Da S, C und D jeweils Dezimalzahlen von 14, 14 und 3 entsprechen, würde man bei ihrer Addition ein Akkumulatorwort erwarten, das dem (richtigen) Ergebnis von 31 entspricht. Das an den Ausgängen von ADᵢ auftretende neue Zwischensummenwort S1 entspricht aber einer Dezimalzahl von +3, das neue Übertragswort C1 einer Dezimalzahl von -4, so daß sich hieraus ein Akkumulatorwort ergibt, das einem (falschen) Ergebnis von -1 entspricht. Dies ist auf eine Überlaufsituation zurückzuführen, die dadurch entstanden ist, daß ein Akkumulatorinhalt von 31 mit einer Wortbreite von n = 5 des Akkumulators nicht mehr dargestellt werden kann.

Zur Ermittlung solcher Überlaufsituationen, die zu fehlerhaften Zwischenergebnissen führen, dient der Dekoder 28. Eine erste Überlaufbedingung, auf die der Dekoder 28 mit einem ersten Überlaufsignal antwortet, entsteht nach einer bevorzugten Ausgestaltung der Erfindung darin, daß die an seinen Eingängen 29 und 30 anliegenden Bits sₙ₋₁ und cₙ₋₁ jeweils 0 sind und wenigstens eines der an den Eingängen 38 und 39 anliegenden Bits sₙ₋₂ und cₙ₋₂ den Wert 1 aufweist. Diese Bedingung wird als positive Überlaufbedingung bezeichnet, das dabei am Ausgang 41 abgegebene, invertierte Überlaufsignal als +O̅V̅F̅L̅. Eine zweite, negative Überlaufbedingung, auf die der Dekoder 28 mit einem am Ausgang 42 abgegebenen negativen invertierten Überlaufsignal -O̅V̅F̅L̅ reagiert, liegt dann vor, wenn die bei 29 und 30 anliegenden Bits sₙ₋₁ und cₙ₋₁ jeweils 1 sind und wenigstens eines der bei 38 und 39 anliegenden Bits sₙ₋₂ und cₙ₋₂ den Wert 0 aufweist. Beim Auftreten eines der Signale +O̅V̅F̅L̅ oder -O̅V̅F̅L̅ werden zusätzlich über die Ausgänge 40 und 40' Signale ORALL mit dem Wert 1 und O̅R̅A̅L̅L̅ mit dem Wert 0 abgegeben.

Zur Sättigung des Akkumulators beim Auftreten einer dieser beiden Überlaufbedingungen werden zweckmäßigerweise die Logikschaltungen, z.B. 26, 27 ..., an den Übertragsausgängen von ADᵢ jeweils durch die Signale ORALL und O̅R̅A̅L̅L̅ veranlaßt, die eingangsseitig anliegenden Übertragsbits cₙ₋₁, cₙ₋₂ ... , die sonst an ihre Ausgänge durchgeschaltet sind, von diesen abzuschalten. Statt dieser Bits werden nun über die Ausgänge aller dieser Logikschaltungen jeweils Sättigungsübertragsbits 0 abgegeben.

Weiterhin werden beim Auftreten der positiven Überlaufbedingung die Logikschaltungen 23, 24 an den Summenausgängen der beiden höchstwertigen Addierer ADₙ₋₁ und ADₙ₋₂ mittels der Signale -O̅V̅F̅L̅, ORALL und O̅R̅A̅L̅L̅ so beeinflußt, daß sie die eingangsseitig anliegenden Zwischensummenbits sₙ₋₁ und sₙ₋₂, die sonst an ihre Ausgänge durchgeschaltet sind, von diesen abschalten und jeweils durch Sättigungszwischensummenbits des Wertes 0 ersetzen. +O̅V̅F̅L̅, ORALL und O̅R̅A̅L̅L̅ bewirken außerdem, daß die Logikschaltungen, z.B. 25, an den Summenausgängen der Addierer ADₙ₋₃ ... AD_{O} die eingangsseitig anliegenden Zwischensummenbits, die sonst an ihre Ausgänge durchgeschaltet sind, von diesen abschalten und durch Sättigungszwischensummenbits des Wertes 1 ersetzen.

Beim Auftreten der negativen Überlaufbedingung werden die Logikschaltungen 23, 24 an den Summenausgängen der beiden höchstwertigen Addierer ADₙ₋₁ und ADₙ₋₂ mittels der Signale ORALL, O̅R̅A̅L̅L̅ und -O̅V̅F̅L̅ so beeinflußt, daß sie die eingangsseitig anliegenden Zwischensummenbits sₙ₋₁ und sₙ₋₂ von ihren Ausgängen abschalten und durch Sättigungszwischensummenbits des Wertes 1 ersetzen. +̅O̅V̅F̅L̅, ORALL und O̅R̅A̅L̅L̅ bewirken ferner, daß die Logikschaltungen, z. B. 25, an den Summenausgängen der Addierer ADₙ₋₃ ... AD_{O} die eingangsseitig anliegenden Zwischensummenbits von ihren Ausgängen abschalten und jeweils durch Sättigungszwischensummenbits des Wertes 0 ersetzen.

Die vorstehend beschriebenen Sättigungsmaßnahmen können dahingehend verallgemeinert werden, daß die Ausgangsleitungen, z.B. 6 bis 8 und 14, 15, an den Ausgängen der Addierer ADᵢ beim Auftreten von Überlaufbedingungen von den über die Addierer ADᵢ abgegebenen Zwischensummen- und Übertragsworten S und C freigeschaltet und stattdessen mit vorgegebenen Sättigungszwischensummen- und Sättigungsübertragsworten beaufschlagt werden. Die Sättigungszwischensummen- und Sättigungsübertragsworte sollten dabei für den Fall einer positiven (negativen) Sättigungsbedingung so gewählt sein, daß sie ein Akkumulatorwort bzw. Summenwort S' ergeben, dessen zugehöriger Akkumulatorinhalt einem Grenzwert möglichst nahekommt, für den die positive (negative) Überlaufbedingung schon gilt, ohne diesen Grenzwert jedoch zu erreichen oder zu überschreiten, und zwar unabhängig davon, wie sich das Akkumulatorwort aus dem Sättigungszwischensummen- und Sättigungsübertragswort zusammensetzt. Die vorstehend genannte Bedingung ist bei dem für einen 5-Bit-Akkumulator genannten Zahlbeispiel mit einem Sättigungsübertragswort von 0000 und einem Sättigungszwischensummenwort von 00111 beim Auftreten einer positiven Überlaufbedingung und einem Sättigungszwischensummenwort von 11000 beim Auftreten einer negativen Überlaufbedingung erfüllt.

Fig. 2 zeigt ein Ausführungsbeispiel des Dekoders 28 von Fig. 1. Hierbei sind die Eingänge 29 und 30 mit den Eingängen eines UND-Gatters 44 sowie mit den Eingängen eines NOR-Gatters 45 verbunden. Die Eingänge 38 und 39 sind an die Eingänge eines NAND-Gatters 46 sowie an die Eingänge eines ODER-Gatters 47 geführt. Die Ausgänge von 44 und 46 liegen an den Eingängen eines UND-Gatters 48, die Ausgänge von 45 und 47 an den Eingängen eines UND-Gatters 49. Die Ausgänge von 48 und 49 liegen ihrerseits an den Eingängen eines ODER-Gatters 50, dessen Ausgang den Ausgang 40 des Dekoders 28 bildet. Von diesem gelangt man über einen Inverter 51 zum Ausgang 40'. Der Ausgang von 49 ist mit einem Inverter 52 beschaltet, dessen Ausgang dem Ausgang 41 des Dekoders entspricht. Außerdem ist der Ausgang von 48 mit einem Inverter 53 beschaltet, dessen Ausgang den Ausgang 42 des Dekoders darstellt. Bei einer Belegung der Ausgänge 29, 30, 38 und 39 jeweils mit den Bits sₙ₋₁, cₙ₋₁, sₙ₋₂ und cₙ₋₂ ist am Ausgang des UND-Gatters 49 das positive Überlaufsignal +OVFL abgreifbar, am Ausgang von 48 des negative Überlaufsignal -OVFL. Am Ausgang 40 des ODER-Gatters 50 steht dann das Signal ORALL zur Verfügung, am Ausgang 40' das hierzu invertierte Signal O̅R̅A̅L̅L̅. An den Ausgängen 41 und 42 treten die invertierten Überlaufsignale +O̅V̅F̅L̅ und -O̅V̅F̅L̅ auf.

In Fig. 3 ist ein Ausführungsbeispiel für die Logikschaltung 26 angegeben, die dem Übertragsausgang 5 von ADₙ₋₂ nachgeschaltet ist. Sie enthält gemäß Fig. 3 zwei mit ihren Schaltstrecken zueinander parallel liegende Schalttransistoren 54 und 55, von denen der erste als P-Kanal-Feldeffekttransistor und der zweite als N-Kanal-Feldeffekttransistor ausgebildet ist. Die Sourceanschlüsse dieser Transistoren sind dabei mit dem Eingang der Logikschaltung 26 verbunden, der mit dem Übertragsausgang 5 von Fig. 1 in Verbindung steht, die Drainanschlüsse dieser Transistoren mit einem Ausgang 56 von 26, der mit dem Eingang des Zwischenspeichers 36 beschaltet ist. Der Ausgang 56 ist über einen weiteren N-Kanal-Schalttransistor 57 mit einem Schaltungspunkt 58 verbunden, der auf Bezugspotential liegt. Die Gates von 54 und 57 sind mit dem Signal ORALL belegt, das Gate von 55 mit dem hierzu invertierten Signal O̅R̅A̅L̅L̅. Die übrigen Logikschaltungen, z.B. 27, die den Übertragsausgängen der Addierer ADₙ₋₃ ... AD_{O} nachgeschaltet sind, sind zweckmäßigerweise ebenfalls gemäß Fig. 3 ausgebildet.

Ein Ausführungsbeispiel für die Logikschaltung 24 ist in Fig. 4 gezeigt. Hier sind zwei mit ihren Schaltstrecken zueinander parallel liegende Schalttransistoren 58a und 59 vorgesehen, deren Sourceanschlüsse mit einem Schaltungspunkt verbunden sind, der mit dem Summenausgang 4 von ADₙ₋₂ in Verbindung steht. Die Drainanschlüsse von 58a und 59 sind an einen Schaltungspunkt 60 geführt, der den Ausgang von 24 darstellt. Der Schaltungspunkt 60 ist dabei über die Serienschaltung zweier P-Kanal-Schalttransistoren 61 und 62 mit einem Anschluß 63 verbunden, der mit der Versorgungsspannung beschaltet ist. Weiterhin ist 60 über die Serienschaltung zweier N-Kanal-Schalttransistoren 64 und 65 mit einem auf Bezugspotential liegenden Anschluß 66 verbunden. Die Gates des P-Kanal-Transistors 58a und des Transistors 64 werden über den Ausgang 40 mit dem Signal ORALL angesteuert, die Gates des N-Kanal-Transistors 59 und des Transistors 62 mit dem über den Ausgang 40' abgegebenen, hierzu inversen Signal O̅R̅A̅L̅L̅. Die Gates von 61 und 65 sind mit dem Ausgang 42 von 28 verbunden und werden mit -O̅V̅F̅L̅ beaufschlagt. Die Logikschaltung 23 ist zweckmäßigerweise auch gemäß Fig. 4 aufgebaut.

Die Logikschaltung 25 ist mit Vorteil entsprechend Fig. 4 aufgebaut, wobei lediglich anstelle des Signals -O̅V̅F̅L̅ das Signal +O̅V̅F̅L̅ zur Ansteuerung der Transistoren 61 und 65 verwendet wird. Die Logikschaltungen, die den Summenausgängen der weiteren Addierer ADₙ₋₄ ... AD_{O} nachgeschaltet sind, sind zweckmäßigerweise ebenfalls entsprechend der Logikschaltung 25 ausgebildet.

Mit dieser schaltungstechnischen Durchbildung der Logikschaltungen an den Ausgängen von ADᵢ und bei Einsatz eines Dekoders nach Fig. 2 gelingt es, den Akkumulator nach Fig. 1 beim Auftreten der obengenannten positiven Überlaufbedingung mit einem Sättigungsübertragswort von 0000 und einem Sättigungszwischensummenwort von 00111 zu beaufschlagen, beim Auftreten der genannten negativen Überlaufbedingung mit einem Sättigungsübertragswort von 0000 und einem Sättigungszwischensummenwort von 11000.

Fig. 5 zeigt die Weiterbildung einer Anordnung nach Fig. 1, die zur bitparallelen Addition von vier Binärzahlen im Zweierkomplement dient. Den bereits in Fig. 1 dargestellten Gruppe von Addierern ADᵢ ist hier eine zusätzliche Gruppe von Addierern ZAᵢ nachgeschaltet, wobei jeder Addierer ZAᵢ mit drei Eingängen versehen ist. Die Ausgangsleitungen von ADᵢ sind dabei unter Weglassung der Logikschaltungen 23 bis 27 und der Zwischenspeicher 33 bis 37 mit den Eingängen der Addierer ZAᵢ verbunden. Im einzelnen sind die Ausgangsleitungen 6 bis 8 jeweils an die ersten Eingänge Z11, Z12 and Z13 von ZAₙ₋₁, ZAₙ₋₂ und ZAₙ₋₃ geführt, die Ausgangsleitungen 14 und 15 an die zweiten Eingänge Z21 und Z22 von ZAₙ₋₁ und ZAₙ₋₂. Allgemein gilt, daß der Summenausgang eines Addierers ADᵢ mit dem ersten Eingang des ihm nachgeschalteten Addierers ZAᵢverbunden ist, während der Übertragsausgang von ADᵢ mit dem zweiten Eingang des Addierers ZAᵢ₊₁ der nächsthöheren Wertigkeit beschaltet ist. Die zusätzlichen Addierer ZAᵢ sind an ihren unteren Ausgangsseiten in derselben Weise und mit den gleichen Schaltungsteilen beschaltet, wie die Addierer ADᵢ in Fig. 1. Diese Schaltungsteile sind daher mit denselben Bezugszeichen versehen wie in Fig. 1, jedoch unter Hinzufügung eines Bezugsstriches. Das an den Punkten 11', 12' ... auftretende Zwischensummenwort, das über die Zwischenspeicher 33', 34' ... an die ersten Eingänge von ADᵢ gelegt wird, stellt eine erste Binärzahl dar, das an den Punkten 21', 22' .. auftretende Übertragswort, das über die Zwischenspeicher 36', 37' ... an die zweiten Eingänge von ADᵢ gelegt wird, eine zweite Binärzahl. Die an den dritten Eingängen von ADᵢ anliegende Zahl D bildet eine dritte Binärzahl und eine an die dritten Eingänge der zusätzlichen Addierer ZAᵢ gelegte Zahl E eine vierte Binärzahl. Diese vier Binärzahlen werden mit dem Addierer nach Fig. 5 bitparallel zueinander addiert. An den Schaltungspunkten 11', 12' ... und 21', 22' ... treten wieder die Zwischensummen- und Übertragsworte auf, aus denen in der Addiereinrichtung AS' das gewünschte Summenwort S'' gebildet wird. Durch den Dekoder 28 wird in Abhängigkeit von den Bits an den ersten beiden Eingängen von ADₙ₋₁ und ADₙ₋₂ festgestellt, ob eine positive oder negative Überlaufbedingung vorliegt. Ist das der Fall, so werden über die Ausgänge 40, 40', 41 und 42 des Dekoders 28 und mittels der Logikschaltungen 23' bis 27' usw. die bereits anhand von Fig. 1 erläuterten Sättigungsmaßnahmen veranlaßt.

Die Anordnung nach Fig. 5 kann in entsprechender Weise durch Hinzufügung weiterer, den Addierern ZAᵢ nachgeschalteter Gruppen von Addierern für eine Addition von fünf oder mehr Binärzahlen im Zweierkomplement erweitert werden. Die Schaltungsteile 23' bis 27' und 33' bis 37' sind dann ausgangsseitig von den in der untersten Addierergruppe angeordneten, der Addiereinrichtung AS' unmittelbar vorgeordneten weiteren Addierern vorgesehen, Die rekursiven Schaltungszweige verlaufen auch hierbei von den Ausgängen der Zwischenspeicher 33' bis 37' zu den Eingängen der Addierer ADᵢ. Aus mehreren Addiererzeilen gebildete Schaltungsanordnungen zur Addition von fünf oder mehr Binärzahlen sind beispielsweise dem Buch "Computer Arithmetic" von K.Hwang, Verlag John Wiley & Sons, New York, 1979, S. 100-103, vgl. insbesondere Fig. 4.3, entnehmbar.

In Fig. 6 ist ein Rekursivfilter erster Ordnung gezeigt, das eine Akkumulator nach Fig. 1 enthält. Eine am Eingang 67 in aufeinanderfolgenden Taktperioden jeweils angelegte Folge von n-stelligen Binärzahlen Di, die im Zweierkomplement dargestellt sind und einer Folge von abgetasteten Amplitudenwerten eines analogen Eingangssignals entsprechen, werden dabei zunächst in einer Verzögerungsstufe 68, die aus n Zwischenspeichern besteht, bitparallel um eine Taktperiodendauer verzögert und sodann jeweils den dritten Eingängen des Akkumulators ADᵢ nach Fig. 1 zugeführt. Die von diesem jeweils abgeleiteten Zwischensummen- und Übertragsworte werden in einer Verzögerungsstufe 69, die aus den Zwischenspeichern 33 bis 37 usw. besteht, um eine weitere Taktperiodendauer verzögert und dann über eine Rekursivschleife 70 den ersten und zweiten Eingängen des Akkumulators ADᵢ zugeführt. Dabei können beide Worte in ihrer Zuordnung zu den einzelnen Addierern ADᵢ um m Bit nach rechts bzw. links verschoben werden, was einer Multiplikation mit 2^{-m} bzw. 2^{m} in einem Bewerter 70a entspricht. Die über 70 zugeführten Worte werden zu der jeweils beim nächstfolgenden Takt an den dritten Eingängen von ADᵢ anliegenden Binärzahl D addiert. Die am Ausgang der Verzögerungsstufe 69 auftretenden Zwischensummen- und Übertragsworte werden der Addiereinrichtung AS über ihre Eingänge 11, 12 ... 21, 22 ...zugeführt und zu dem gefilterten, digitalen Ausgangssignal Di' zusammengesetzt.

Fig. 7 zeigt ein rekursives Filter zweiter Ordnung, das sich von Fig. 6 dadurch unterscheidet, daß die von 69 abgegebenen Zwischensummen- und Übertragsworte einem Akkumulator nach Fig. 5 zugeführt werden, der mit ADᵢ, ZAᵢ angedeutet ist. Die von diesem abgegebenen Zwischensummen- und Übertragsworte werden in einer Verzögerungsstufe 71 (die den Zwischenspeichern 33' bis 37' entspricht) um eine Taktperiodendauer verzögert und über eine Rekursivschleife 72 sowohl den ersten beiden Eingängen des Akkumulators ADᵢ als auch den ersten beiden Eingängen des Akkumulators ADᵢ, ZAᵢ zugeführt. Beide Worte können in ihrer Zuordnung zu den einzelnen Addierern ADᵢ des Akkumulators nach Fig. 5 um ml Bit nach rechts bzw. links verschoben werden, was einer Multiplikation mit 2^{-m1} bzw. 2^{m1} in einem Bewerter 72a entspricht. Die so bewerteten Worte können dann weiterhin in ihrer Zuordnung zu den einzelnen Addierern ADᵢ des Akkumulators nach Fig. 1 um m2 Bit nach rechts bzw. links verschoben werden, was einer weiteren Multiplikation von 2^{-m2} bzw. 2^{m2} in einem Bewerter 72b entspricht. Der dritte Eingang von ADᵢ ist mit Di belegt, der dritte und vierte Eingang von ADᵢ, ZAᵢ mit den von 69 abgegebenen Zwischensummen- und Übertragsworten des ersten Akkumulators ADᵢ. Die am Ausgang der Verzögerungsstufe 71 auftretenden Zwischensummen -und Übertragsworte werden der Addierstufe AS' über ihren Eingang 11', 12' ...21', 22' zugeführt und zu dem gefilterten, digitalen Ausgangssignal Di' zusammengesetzt.

In einem rekursiven Filter n'ter Ordnung können in analoger Weise ein Akkumulator nach Fig. 2 und n-1 Akkumulatoren nach Fig. 5 eingesetzt werden.

Die Zwischenspeicher 33 bis 37 bzw. 33' bis 37' usw. können vorteilhaft als Schieberegisterstufen ausgebildet sein, die jeweils aus Master-Slave-Flipflops bestehen. Weiterhin kann die Addiereinrichtung AS bzw. AS' entsprechend der in Fig. 9 der Patentanmeldung P (VPA 85 P 1437 DE) dargestellten und dort eingehend beschriebenen Addiereinrichtung ausgebildet sein.

Schließlich kann der Addierer ADₙ₋₁ ein ausgangsseitiges Korrekturglied aufweisen, das eine Überlaufkorrektur vornimmt, die dann notwendig ist, wenn sich relativ große Zwischensummen- und Übertragsworte entgegengesetzter Vorzeichen zu einem relativ kleinen Summenwort zusammensetzen. Durch ein solches Korrekturglied wird das Übertragswort des Addierers ADₙ₋₂ mit der zweithöchsten Wertigkeit durch das Übertragsbit des höchstwertigen Addierers ADₙ₋₁ ersetzt und für den Fall, daß die Übertragsbits der beiden höchstwertigen Addierer ADₙ₋₁ und ADₙ₋₂ ungleich sind, das Summenbit von ADₙ₋₁ durch das Übertragsbit von ADₙ₋₁ ersetzt. Derartige Überlaufkorrekturmaßnahmen sind in der Patentanmeldung P (VPA 85 P 1437 DE) eingehend beschrieben. Man kann davon ausgehen, daß die auf die Ausgangsleitungen, z.B. 6 bis 8, 14 und 15, gegebenen Zwischensummen- und Übertragsworte jeweils bereits in dieser Weise unter Verwendung eines solchen in den Schaltungsblock für ADₙ₋₁ einbezogenen Korrekturgliedes korrigiert sind. Die Zwischensummen- und Übertragsworte der Addierer ZAᵢ und weiterer Addierergruppen werden zweckmäßig in analoger Weise bezüglich eines solchen Überlaufs korrigiert, wobei entsprechende Korekturglieder auch in den Block ZAₙ₋₁ und in die Blöcke für die jeweils höchstwertigen Addierer weiterer Addierergruppen einbezogen sind.

In Abweichung von den Ausführungsbeispielen nach den Figuren 1 und 5 können außer den beiden höchstwertigen Addierern, z.B. ADₙ₋₁ und ADₙ₋₂, jeder Gruppe auch noch weitere Addierer sich anschließender Wertigkeiten, z.B. ADₙ₋₃ und ADₙ₋₄, jeweils über ihre dritten Eingänge mit ein- und demselben Bit einer zugeführten Binärzahl D bzw. E belegt sein. Das entspricht dann einer Vorzeichenvervielfachung der im Zweierkomplement darstellten Binärzahlen.

### Bezugszeichenliste

- 1 bis 3: Eingänge von ADₙ₋₂
- 4: Summenausgang von ADₙ₋₂ 5 Übertragsausgang von ADₙ₋₂
- 6 bis 8: Ausgangsleitungen von ADᵢ
- 11 bis 13: erste Eingänge von AS
- 14, 15: Ausgangsleitungen von ADᵢ
- 16 bis 19: rekursive Schaltungszweige
- 21, 22: zweite Eingänge von AS
- 31 bis 3n: Ausgänge von AS
- 23 bis 27: Logikschaltungen
- 33 bis 37: Zwischenspeicher
- 28: Dekoder
- 29, 30, 38, 39: Eingänge von 28
- 40, 40', 41, 42: Ausgänge von 28
- 44: UND-Gatter
- 45: NOR-Gatter
- 46: NAND-Gatter
- 47: ODER-Gatter
- 48, 49: UND-Gatter
- 50: ODER-Gatter
- 51, 52, 53: Inverter
- 54, 55: Schalttransistoren
- 56: Ausgang von 26
- 57: Schalttransistor
- 58: Schaltungspunkt
- 58a, 59: Schalttransistoren
- 60: Schaltungspunkt
- 61, 62: Schalttransistoren
- 63: Anschluß
- 64, 65: Schalttransistoren
- 66: Anschluß
- 67: Eingang eines Rekursivfilters
- 68: Verzögerungsstufe
- 69: Verzögerungsstufe
- 70: Rekursivschleife
- 70a: Bewerter
- 71: Verzögerungsstufe
- 72: Rekursivschleife
- 72a: Bewerter
- 72b: Bewerter
- ADₙ₋ᵢ: Addierer
- AS: Addiereinrichtung
- ASₙ₋ᵢ: Addierer in AS
- S: Zwischensummenwort
- C: Übertragswort
- S': Summenwort
- ZAᵢ: zusätzliche Addierer

## Patentansprüche

1. Anordnung mit einem Carry-Save-Addierer zur bitparallelen Addition von Binärzahlen im Zweierkomplement mit einer Gruppe von ersten Addierern (ADᵢ), die jeweils Eingänge für Binärzahlenbits gleicher Wertigkeit sowie Ausgänge (4, 5) zur Abgabe eines Zwischensummenbits und eines Übertragsbits aufweisen, mit einer Addiereinrichtung (AS), in der aus Zwischensummenbits gebildete Zwischensummenworte und aus Übertragsbits gebildete Übertragsworte jeweils zu Summenworten zusammengesetzt werden, mit rekursiven Schaltungszweigen, über die die Zwischensummenworte an erste Eingänge und die Übertragsworte an zweite Eingänge der ersten Addierer (ADᵢ) gelegt werden, und mit dritten Eingängen der ersten Addierer, die mit extern zugeführten Binärzahlenbits belegt sind, **dadurch gekennzeichnet,** daß ein Dekoder (28) vorgesehen ist, der wenigstens mit den beiden höchstwertigen Bits der Zwischensummen- und Übertragsworte beaufschlagt ist, daß der Dekoder (28) so ausgebildet ist, daß er ein positives Überlaufsignal abgibt, sofern die am ersten und zweiten Eingang des höchstwertigen ersten Addierers (ADₙ₋₁) anliegenden Zwischensummen- und Übertragsbits (sₙ₋₁, cₙ₋₁) jeweils 0 sind und wenigstens eines der an dem ersten und zweiten Eingang des ersten Addierers (ADₙ₋₁) anliegenden Zwischensummen- und Übertragungsbits (sₙ₋₁, cₙ₋₁) jeweils 0 sind und wenigstens eines der an dem ersten und zweiten Eingang des ersten Addierers (ADₙ₋₂) der zweithöchsten Wertigkeit anliegenden Zwischensummen- und Übertragungsbits (sₙ₋₂, cₙ₋₂) den Wert 1 aufweist und ein negatives Überlaufsignal erzeugt, sofern die an dem ersten und zweiten Eingang des höchstwertigen ersten Addierers (ADₙ₋₁) anliegenden Zwischensummen- und Übertragsbits (sₙ₋₁, cₙ₋₁) jeweils 1 sind und wenigstens eines der an dem ersten und zweiten Eingang des ersten Addierers (ADₙ₋₂) der zweithöchsten Wertigkeit anliegenden Zwischensummen- und Übertragsbits (sₙ₋₂, cₙ₋₂) den Wert 0 aufweist, daß Logikschaltungen (23 bis 27) vorgesehen sind, die in Abhängigkeit vom Auftreten der Überlaufsignale eine Abschaltung der jeweiligen Zwischensummen- und Übertragsworte und eine Anschaltung von Sättigungszwischensummen- und Sättigungsübertragsworten an die rekursiven Schaltungszweige vornehmen, daß die Logikschaltungen beim Auftreten eines positiven Überlaufsignals zur Abgabe eines ersten Sättigungs-Übertragsworts und eines ersten Sättigungs-Zwischensummenworts an die rekursiven Schaltungszweige (16 bis 19) veranlaßt werden, wobei für alle Kombinationen von ersten Sättigungs-Zwischensummenworten und ersten Sättigungs-Übertragsworten gilt, daß deren Summen stets einem Summenwort entsprechen, dessen beide höchstwertigen Bits den Wert 0 und dessen übrige Bits den Wert 1 aufweisen, und daß die Logikschaltungen beim Auftreten eines negativen Überlaufsignals zur Abgabe eines zweiten Sättigungs-Übertragsworts und eines zweiten Sättigungs-Zwischensummenworts an die rekursiven Schaltungszweige veranlaßt werden, wobei für alle Kombinationen von zweiten Sättigungs-Zwischensummenworten und zweiten Sättigungs-Übertragsworten gilt, daß deren Summen stets einem Summenwort entsprechen, dessen beide höchstwertigen Bits den Wert 1 und dessen übrige Bits den Wert 0 aufweisen.

2. Anordnung nach Anspruch 1, **dadurch gekennzeichnet,** daß von den ersten Addierern (ADᵢ) gewonnene erste Zwischensummen- und Übertragsbits über erste Zwischenspeicher (33 bis 37) sowohl den ersten und zweiten Eingängen der ersten Addierer (ADᵢ) als auch der Addiereinrichtung (AS) zugeführt werden, daß die Logikschaltungen (23 bis 27) den Ausgängen der ersten Addierer (ADᵢ) nachgeschaltet sind, daß die Zwischenspeicher mit Taktimpulsen einer vorgegebenen Taktfrequenz getaktet sind und daß die Belegung der dritten Eingänge der ersten Addierer (ADᵢ) mit einer ersten Folge von Binärzahlen (Di) im Rhythmus der Taktfrequenz erfolgt.

3. Anordnung nach Anspruch 1, **dadurch gekennzeichnet,** daß der Gruppe von ersten Addierern (ADᵢ) wenigstens eine weitere Gruppe von Addierern (ZAᵢ) nachgeschaltet ist, wobei die Addierer einer solchen weiteren Gruppe jeweils erste und zweite Eingänge für gleichwertige Zwischensummen- und Übertragsbits von der jeweils unmittelbar vorgeordneten Gruppe von Addierern sowie Summen- und Übertragsausgänge zur Abgabe von Zwischensummen- und Übertragsbits an die jeweils unmittelbar nachgeordnete Gruppe von Addierern oder im Falle der letzten weiteren Gruppe an die Addiereinrichtung (AS) aufweisen, daß zwischen den Ausgängen der Addierer der letzten weiteren Gruppe und der Addiereinrichtung weitere Zwischenspeicher (33' bis 37') eingefügt sind, daß die rekursiven Schaltungszweige von den Ausgängen der Addierer der letzten weiteren Gruppe über die weiteren Zwischenspeicher (33' bis 37') zu den ersten und zweiten Eingängen der ersten Addierer (ADᵢ) hin verlaufen, daß die Addierer jeder weiteren Gruppe jeweils dritte Eingänge aufweisen, die mit den Gruppen individuell zugeordneten weiteren Folgen von Binärzahlen (Ei) belegt sind, daß die Logikschaltungen (23' bis 27') den Ausgängen der Addierer (ZAᵢ) der letzten weiteren Gruppe nachgeschaltet sind, daß die weiteren Zwischenspeicher mit Taktimpulsen einer vorgegebenen Taktfrequenz getaktet sind und daß die Belegung der dritten Eingänge der Addierer der weiteren Gruppen mit den weiteren Folgen von Binärzahlen (Ei) jeweils im Rhythmus der Taktfrequenz erfolgt.

4. Anordnung nach Anspruch 2, **dadurch gekennzeichnet,** daß entweder die ersten Eingänge der ersten Addierer (ADᵢ) jeweils mit den zur Abgabe der ersten Zwischensummenbits dienenden ersten Zwischenspeichern (33, 34, 35) derselben ersten Addierer und die zweiten Eingänge der ersten Addierer (ADᵢ) jeweils mit den zur Abgabe von ersten Übertragsbits dienenden ersten Zwischenspeichern (36, 37) von ersten Addierern der nächstniedrigeren Wertigkeit verbunden sind oder eine hiervon abweichende Zuordnung der ersten Addierer zu den ersten Zwischenspeichern getroffen ist, bei der die Wertigkeiten der eingangsseitig mit den Zwischensummen- und Übertragsbits beaufschlagten ersten Addierer gegenüber der angegebenen Zuordnung jeweils um eine konstante Stellenzahl differiert.

5. Anordnung nach Anspruch 3, **dadurch gekennzeichnet,** daß entweder die ersten Eingänge der ersten Addierer (ADᵢ) mit den zur Abgabe der Zwischensummenbits dienenden weiteren Zwischenspeicher (33', 34', 35') von Addierern (ZAᵢ) derselben Wertigkeit aus der letzten weiteren Gruppe und daß die zweiten Eingänge der ersten Addierer (ADᵢ) jeweils mit den zur Abgabe der Übertragsbits dienenden weiteren Zwischenspeichern (36', 37') von Addierern (ZAᵢ) der nächstniedrigeren Wertigkeit aus der letzten weiteren Gruppe verbunden sind oder eine hiervon abweichende Zuordnung der ersten Addierer zu den weiteren Zwischenspeichern getroffen ist, bei der die Wertigkeiten der eingangsseitig mit den Zwischensummen- und Übertragsbits beaufschlagten ersten Addierer gegenüber der angegebenen Zuordnung jeweils um eine konstante Stellenzahl differieren.

6. Anordnung nach den Anspruch 1, **dadurch gekennzeichnet,** daß beim Auftreten eines positiven Überlaufsignals sämtliche Bits des Sättigungs-Übertragsworts den Wert 0 aufweisen, die beiden höchstwertigen Bits des Sättigungszwischensummenworts den Wert 0 und die übrigen Bits desselben den Wert 1 aufweisen.

7. Anordnung nach Anspruch 1, **dadurch gekennzeichnet,** daß beim Auftreten eines negativen Überlaufsignals sämtliche Bits des Sättigungsübertragsworts den Wert 0 aufweisen, die beiden höchstwertigen Bits des Sättigungszwischensummenworts den Wert 1 und die übrigen Bits desselben den Wert 0 aufweisen.

8. Anordnung nach Anspruch 1, **dadurch gekennzeichnet,** daß der Dekoder ein erstes UND-Gatter (44) enthält, dessen Eingänge mit den beiden ersten Eingängen des höchstwertigen ersten Addierers (ADₙ₋₁) verbunden sind, daß ein NAND-Gatter (46) vorgesehen ist, dessen Eingänge mit den beiden ersten Eingängen des ersten Addierers (ADₙ₋₂) der zweithöchsten Wertigkeit verbunden sind, daß ein dem ersten UND-Gatter (44) eingangsseitig parallel geschaltetes NOR-Gatter (45) und ein dem zweiten NAND-Gatter (46) eingangsseitig parallel geschaltetes erstes ODER-Gatter (47) vorgesehen sind, daß die Ausgänge des ersten UND- und des NAND-Gatters (44, 46) mit den Eingängen eines zweiten UND-Gatters (48) beschaltet sind, daß die Ausgänge des NOR-Gatters (45) und des ersten ODER-Gatters (47) mit den Eingängen eines dritten UND-Gatters (49) verbunden sind, daß der Ausgang des zweiten UND-Gatters (48) über einen ersten Inverter (53) mit einem Dekoderausgang (42) für ein inverses negatives Überlaufsignal verbunden ist, daß der Ausgang des dritten UND-Gatters (49) über einen zweiten Inverter (52) mit einem Dekoderausgang (41) für ein inverses positives Überlaufsignal verbunden ist, daß die Ausgänge des zweiten und dritten UND-Gatters (48, 49) an die Eingänge eines zweiten ODER-Gatters (50) geführt sind und daß der Ausgang des letzteren unmittelbar mit einem Dekoderausgang (40) für ein allgemeines Überlaufsignal und über einen dritten Inverter (51) mit einem Dekoderausgang (40') für das inverse allgemeine Überlaufsignal verbunden ist.

9. Anordnung nach einem der Ansprüche 1 bis 8, **dadurch gekennzeichnet,** daß die die Abschaltung der Übertragsworte und die Anschaltung der Sättigungsübertragsworte vornehmenden Logikschaltungen jeweils aus zwei Feldeffekt-Schalttransistoren unterschiedlicher Kanaltypen bestehen, deren Sourceanschlüsse mit einem Eingang der Logikschaltung verbunden sind und deren Drainanschlüsse an einen Ausgang der Logikschaltung geführt sind, wobei das Gate des einen dieser Transistoren mit dem allgemeinen Überlaufsignal und das Gate des anderen mit dem inversen allgemeinen Überlaufsignal belegt sind, und daß der Ausgang (56) der Logikschaltung über einen weiteren Feldeffekt-Schalttransistor (57), dessen Gate mit dem allgemeinen Überlaufsignal angesteuert wird, mit einem auf Bezugspotential liegenden Anschluß (58) verbunden ist.

10. Anordnung nach einem der Ansprüche 1 bis 9, **dadurch gekennzeichnet,** daß die die Abschaltung der Zwischensummenworte und die Anschaltung der Sättigungszwischensummenworte vornehmenden Logikschaltungen jeweils aus zwei weiteren Feldeffekt-Schalttransistoren (58a, 59) unterschiedlicher Kanaltypen bestehen, deren Sourceanschlüsse an einen Eingang der Logikschaltung geführt sind und deren Drainanschlüsse an einem Ausgang der Logikschaltung liegen, wobei das Gate des einen dieser letzteren Transistoren mit dem allgemeinen Überlaufsignal und das Gate des anderen mit dem inversen allgemeinen Überlaufsignal beschaltet sind, daß der Ausgang (60) der Logikschaltung über eine erste Serienschaltung zweier Feldeffekt-Schalttransistoren des einen Kanaltyps (61, 62) mit einem Anschluß (63) verbunden ist, der mit einer Versorgungsspannung beschaltet ist, und über eine zweite Serienschaltung zweier Feldeffekt-Schalttransistoren (64, 65) des anderen Kanaltyps mit einem Anschluß (66) verbunden ist, der auf Bezugspotential liegt, und daß jeweils einer der Feldeffekt-Schalttransistoren der ersten und zweiten Serienschaltung mit dem positiven oder negativen Überlaufsignal angesteuert wird, während der andere Transistor der einen Serienschaltung mit dem allgemeinen Überlaufsignal und der andere Transistor der anderen Serienschaltung mit dem inversen allgemeinen Überlaufsignal angesteuert werden.

11. Anwendung einer Anordnung nach Anspruch 2 auf ein digitales Filter, **dadurch gekennzeichnet,** daß die ersten Addierer (ADᵢ) zur Addition von über eine Rekursivschleife (70, 72) des digitalen Filters zugeführte Zwischensummen- und Übertragsworten mit über die dritten Eingänge der ersten Addierer (ADᵢ) zugeführten, abgetasteten digitalisierten Amplitudenwerten eines Eingangssignals (Di) des digitalen Filters dienen und hierfür Akkumulatoren aufweisen, wobei die zur Abgabe der ersten Zwischensummen- und Übertragsbits dienenden Zwischenspeicher (33 bis 37) eine Verzögerungsstufe (69) bilden, und daß die Addiereinrichtung (AS) zur Bildung der digitalisierten Amplitudenwerte des gefilterten Eingangssignals (Di') dient.

12. Anwendung einer Anordnung nach den Ansprüchen 3 und 11 mit einer einzigen weiteren Gruppe von Addieren auf ein digitales Filter, **dadurch gekennzeichnet,** daß die ersten Addierer (ADᵢ) und die Addierer (ZAᵢ) der weiteren Gruppe zur Addition von über eine Rekursivschleife (72) eines digitalen Filters zweiter Ordnung den ersten beiden Eingängen der ersten Addierer (ADᵢ) zugeführten Zwischensummen- und Übertragsworten mit über die dritten Eingänge der ersten Addierer (ADᵢ) und über die dritten Eingänge der Addierer (ZAᵢ) der weiteren Gruppe zugeführten Zwischensummen- und Übertragsworten der Akkumulatoren der esten Addierer (ADᵢ) dienen, wobei die zur Abgabe der Zwischensummen- und Übertragsworte der Addiere (ZAᵢ) der weiteren Gruppe dienenden Zwischenspeicher (23' bis 27') eine Verzögerungsstufe (71) bilden, und daß die Addiereinrichtung (AS) zur Bildung der digitalisierten Amplitudenwerte des gefilterten Eingangssignals (D') dient.

13. Anordnung nach einem der Ansprüche 2 bis 12, **dadurch gekennzeichnet,** daß die Zwischenspeicher als Schieberegisterstufen ausgebildet und vorzugsweise in Form von Master-Slave-Flipflops realisiert sind.

## Claims

1. Arrangement having a carry-save adder for the bit-parallel addition of binary numbers in two's complement, having a group of first adders (ADᵢ), which have in each case inputs for binary number bits of the same significance and also outputs (4, 5) for outputting an intermediate sum bit and a carry bit, having an adding means (AS) in which the intermediate sum words formed from intermediate sum bits and carry words formed from carry bits are combined in each case to form sum words, having recursive circuit branches via which the intermediate sum words are applied to first inputs and the carry words are applied to second inputs of the first adder (ADᵢ), and having third inputs of the first adder which receive externally supplied binary number bits, characterised in that a decoder (28) is provided which receives at least the two highest-order bits of the intermediate sum words and carry words, in that the decoder (28) is designed in such a way that it outputs a positive overflow signal if the intermediate sum bits and carry bits (sₙ₋₁, cₙ₋₁) present at the first and second input of the highest-order first adder (ADₙ₋₁) are 0 in each case and at least one of the intermediate sum bits and carry bits (sₙ₋₁, cₙ₋₁) present at the first and second input of the first adder (ADₙ₋₁) are 0 in each case and at least one of the intermediate sum bits and carry bits (sₙ₋₂, cₙ₋₂) present at the first and second input of the first adder (ADₙ₋₂) of the second-highest order has the value 1, and generates a negative overflow signal if the intermediate sum bits and carry bits (sₙ₋₁, cₙ₋₁) present at the first and second input of the highest-order first adder (ADₙ₋₁) are 1 in each case and at least one of the intermediate sum bits and carry bits (sₙ₋₂, cₙ₋₂) present at the first and second input of the first adder (ADₙ₋₂) of the second-highest order has the value 0, in that logic circuits (23 to 27) are provided which, depending on the occurrence of the overflow signals, effect a disconnection of the respective intermediate sum words and carry words and a connection of saturation intermediate sum words and saturation carry words to the recursive circuit branches, in that, upon the occurrence of a positive overflow signal, the logic circuits are caused to output a first saturation carry word and a first saturation intermediate sum word to the recursive circuit branches (16 to 19), in which the following applies to all combinations of first saturation intermediate sum words and first saturation carry words: the sums thereof always correspond to a sum word whose two highest-order bits have the value 0 and whose remaining bits have the value 1, and in that, upon the occurrence of a negative overflow signal, the logic circuits are caused to output a second saturation carry word and a second saturation intermediate sum word to the recursive circuit branches, in which the following applies to all combinations of second saturation intermediate sum words and second saturation carry words: the sums thereof always correspond to a sum word whose two highest-order bits have the value 1 and whose remaining bits have the value 0.

2. Arrangement according to Claim 1, characterised in that first intermediate sum bits and carry bits obtained from the first adders (ADᵢ) are supplied via first intermediate memories (33 to 37) both to the first and second inputs of the first adders (ADᵢ) and to the adding means (AS), in that the logic circuits (23 to 27) are connected downstream of the outputs of the first adders (ADᵢ), in that the intermediate memories are clocked with clock pulses of a predetermined clock frequency, and in that a first sequence of binary numbers (Di) is applied to the third inputs of the first adders (ADᵢ) in synchronism with the clock frequency.

3. Arrangement according to Claim 1, characterised in that connected downstream of the group of first adders (ADᵢ) is at least one further group of adders (ZAᵢ), the adders of such a further group having in each case first and second inputs for equivalent intermediate sum bits and carry bits of the respective immediately preceding group of adders as well as sum outputs and carry outputs for outputting intermediate sum bits and carry bits to the respective immediately following group of adders, or, in the case of the last further group, to the adding means (AS), in that further intermediate memories (33' to 37') are inserted between the outputs of the adders of the last further group and the adding means, in that the recursive circuit branches proceed from the outputs of the adders of the last further group via the further intermediate memories (33' to 37') to the first and second inputs of the first adders (ADᵢ), in that the adders of each further group have third inputs in each case which receive further sequences of binary numbers (Ei) individually assigned to the groups, in that the logic circuits (23' to 27') are connected downstream of the outputs of the adders (ZAᵢ) of the last further group, in that the further intermediate memories are clocked with clock pulses of a predetermined clock frequency, and in that the further sequences of binary numbers (Ei) are applied to the third inputs of the adders of the further groups in synchronism with the clock frequency in each case.

4. Arrangement according to Claim 2, characterised in that either the first inputs of the first adders (ADᵢ) are connected in each case to the first intermediate memories (33, 34, 35) of the selfsame first adders serving to output the first intermediate sum bits and the second inputs of the first adders (ADᵢ) are connected in each case to the first intermediate memories (36, 37) of first adders of the next-lower order serving to output first carry bits, or there is an assignment of the first adders to the first intermediate memories differing therefrom in which the orders of the first adders receiving the intermediate sum bits and carry bits on the input side differ from the specified assignment by a constant number of orders in each case.

5. Arrangement according to Claim 3, characterised in that either the first inputs of the first adders (ADᵢ) are connected to the further intermediate memories (33', 34', 35'), serving to output the intermediate sum bits, of adders (ZAᵢ) of the same order from the last further group, and that the second inputs of the first adders (ADᵢ) are connected in each case to the further intermediate memories (36', 37'), serving to output the carry bits, of adders (ZAᵢ) of the next-lower order from the last further group, or there is an assignment of the first adders to the further intermediate memories differing therefrom in which the orders of the first adders receiving the intermediate sum bits and carry bits on the input side differ from the specified assignment by a constant number of orders in each case.

6. Arrangement according to Claim 1, characterised in that upon the occurrence of a positive overflow signal, all the bits of the saturation carry word have the value 0, the two highest-order bits of the saturation intermediate sum word have the value 0 and the remaining bits thereof have the value 1.

7. Arrangement according to Claim 1, characterised in that upon the occurrence of a negative overflow signal, all the bits of the saturation carry word have the value 0, the two highest-order bits of the saturation intermediate sum word have the value 1 and the remaining bits thereof have the value 0.

8. Arrangement according to Claim 1, characterised in that the decoder contains a first AND gate (44), the inputs of which are connected to the two first inputs of the highest-order first adder (ADₙ₋₁), in that a NAND gate (46) is provided, the inputs of which are connected to the two first inputs of the first adder (ADₙ₋₂) of the second-highest order, in that a NOR gate (45) connected in parallel with the first AND gate (44) on the input side and a first OR gate (47) connected in parallel with the second NAND gate (46) on the input side are provided, in that the outputs of the first AND gate and of the NAND gate (44, 46) are connected to the inputs of a second AND gate (48), in that the outputs of the NOR gate (45) and of the first OR gate (47) are connected to the inputs of a third AND gate (49), in that the output of the second AND gate (48) is connected via a first inverter (53) to a decoder output (42) for an inverted negative overflow signal, in that the output of the third AND gate (49) is connected via a second inverter (52) to a decoder output (41) for an inverted positive overflow signal, in that the outputs of the second and third AND gate (48, 49) are connected to the inputs of a second OR gate (50), and in that the output of the latter is connected directly to a decoder output (40) for a general overflow signal and via a third inverter (51) to a decoder output (40') for the inverted general overflow signal.

9. Arrangement according to one of Claims 1 to 8, characterised in that the logic circuits effecting the disconnection of the carry words and the connection of the saturation carry words comprise in each case two field-effect switching transistors of different channel types, the source terminals of which are connected to an input of the logic circuit, and the drain terminals of which are connected to an output of the logic circuit, the gate of one of said transistors receiving the general overflow signal and the gate of the other one receiving the inverted general overflow signal, and in that the output (56) of the logic circuit is connected via a further field-effect switching transistor (57), the gate of which is driven by the general overflow signal, to a terminal (58) connected to reference potential.

10. Arrangement according to one of Claims 1 to 9, characterised in that the logic circuits effecting the disconnection of the intermediate sum words and the connection of the saturation intermediate sum words comprise in each case two further field-effect switching transistors (58a, 59) of different channel types, the source terminals of which are connected to an input of the logic circuit, and the drain terminals of which are connected to an output of the logic circuit, the gate of one of the aforesaid transistors receiving the general overflow signal and the gate of the other one receiving the inverted general overflow signal, in that the output (60) of the logic circuit is connected via a first series connection of two field-effect switching transistors of the one channel type (61, 62) to a terminal (63) which is connected to a supply voltage, and via a series connection of two field-effect switching transistors (64, 65) of the other channel type to a terminal (66) which is connected to reference potential, and in that in each case one of the field-effect switching transistors of the first and second series connection is driven by the positive or negative overflow signal, while the other transistor of the one series connection is driven by the general overflow signal and the other transistor of the other series connection is driven by the inverted general overflow signal.

11. Application of an arrangement according to Claim 2 to a digital filter, characterised in that the first adders (ADᵢ) serve to add intermediate sum words and carry words, supplied via a recursive loop (70, 72) of the digital filter, to sampled digitised amplitude values of an input signal (Di) of the digital filter, supplied via the third inputs of the first adders (ADᵢ), and have accumulators for this purpose, in which the intermediate memories (33 to 37) serving to output the first intermediate sum bits and carry bits form a delay stage (69), and in that the adding means (AS) serves to form the digitised amplitude values of the filtered input signal (Di').

12. Application of an arrangement according to Claims 3 and 11 having a single further group of adders to a digital filter, characterised in that the first adders (ADᵢ) and the adders (ZAᵢ) of the further group serve to add intermediate sum words and carry words, supplied via a recursive loop (72) of a second-order digital filter to the first two inputs of the first adders (ADᵢ), to intermediate sum words and carry words, supplied via the third inputs of the adders (ZAᵢ) of the further group, of the accumulators of the first adders (ADᵢ), in which the intermediate memories (23' to 27') serving to output the intermediate sum words and carry words of the adders (ZAᵢ) of the further group form a delay stage (71), and in that the adding means (AS) serves to form the digitised amplitude values of the filtered input signal (D').

13. Arrangement according to one of Claims 2 to 12, characterised in that the intermediate memories are designed as shift register stages and are preferably realized in the form of master-slave flip-flops.

## Revendications

1. Dispositif comportant un additionneur Carry-Save (sauvegarde de report) pour l'addition, en parallèle au niveau des bits, de nombres binaires dans le système de complémentation à deux, comportant un groupe de premiers additionneurs (ADᵢ), qui possèdent respectivement des entrées pour des bits de nombres binaires de même rang ainsi que des sorties (4,5) pour la délivrance d'un bit de somme intermédiaire et d'un bit de report, un dispositif additionneur (AS), dans lequel des mots de sommes intermédiaires formés à partir de bits de sommes intermédiaires, et des mots de report, formés à partir de bits de report, sont assemblés respectivement pour former des mots de sommes, des branches récursives de circuit, au moyen desquelles les mots de sommes intermédiaires sont appliqués à des premières entrées et les mots de report sont appliqués à des secondes entrées des premiers additionneurs (ADᵢ), et des troisièmes entrées des premiers additionneurs, qui sont occupées par des bits de nombres binaires envoyés de l'extérieur, caractérisé par le fait qu'il est prévu un décodeur (28), qui est chargé au moins par les deux bits de poids maximum des mots de sommes intermédiaires et des mots de report, que le décodeur (28) est agencé de manière à délivrer un signal de dépassement de capacité positif dans la mesure où les bits de sommes intermédiaires et les bits de report (sₙ₋₁, cₙ₋₁), qui sont appliqués aux première et seconde entrées du premier additionneur de rang maximum (ADₙ₋₁), sont respectivement égaux à 0, et au moins l'un des bits de sommes intermédiaires et de report (sₙ₋₁, cₙ₋₁) appliqués aux première et seconde entrées du premier additionneur (ADₙ₋₁) est égal respectivement à 0 et au moins l'un des bits de sommes intermédiaires et de report (sₙ₋₂, cₙ₋₂), qui sont appliqués aux première et seconde entrées du premier additionneur de rang maximum en second (ADₙ₋₂), possède la valeur 1 et produit un signal de dépassement de capacité négatif dans la mesure où les bits de sommes intermédiaires et de report (sₙ₋₁, cₙ₋₁) appliqués aux première et seconde entrées du premier additionneur de rang maximum (ADₙ₋₁) sont égaux respectivement à 1 et au moins l'un des bits de sommes intermédiaires et de report (sₙ₋₂, Cₙ₋₂), qui sont appliqués aux première et seconde entrées du premier additionneur possédant le rang maximum en second (ADₙ₋₂), possède la valeur 0, qu'il est prévu des circuits logiques (23 à 27), qui, en fonction de l'apparition dés signaux de dépassement de capacité, déclenchent une interruption des mots respectifs de sommes intermédiaires et de report et l'application de mots de sommes intermédiaires de saturation et de report de saturation aux branches récurcives du circuit, que lors de l'apparition d'un signal de dépassement de capacité positif, les circuits logiques sont commandés de manière à délivrer un premier mot de report de saturation et un premier mot de somme intermédiaire de saturation aux branches récursives (16 à 19) du circuit, auquel cas pour toutes les combinaisons de premiers mots de sommes intermédiaires de saturation et de premiers mots de report de saturation, leurs sommes correspondent toujours à un mot de somme, dont les deux bits de poids maximum possèdent la valeur 0 et dont les autres bits possèdent la valeur 1, et que lors de l'apparition d'un signal de dépassement de capacité négatif, les circuits logiques sont commandés pour délivrer un second mot de report de saturation et un second mot de somme intermédiaire de saturation aux branches récursives du circuit, auquel cas pour toutes les combinaisons de seconds mots de sommes intermédiaires de saturation et de seconds mots de report de saturation, leurs sommes correspondent toujours à un mot de somme, dont les deux bits de poids maximum possèdent la valeur 1 et dont les autres bits possèdent la valeur 0.

2. Dispositif suivant la revendication 1, caractérisé par le fait que des premiers bits de sommes intermédiaires et des premiers bits de report, qui sont fournis par les premiers additionneurs (ADᵢ), sont envoyés par l'intermédiaire de premières mémoires intermédiaires (33 à 37) aussi bien aux premières et secondes entrées des premiers additionneurs (ADᵢ) qu'au dispositif additionneur (AS), que les circuits logiques (23 à 27) sont branchés en aval des sorties des premiers additionneurs (ADᵢ), que les mémoires intermédiaires sont commandées de façon cadencée par des impulsions de cadence possédant une fréquence prédéterminée, et que l'occupation des troisièmes entrées des premiers additionneurs (ADᵢ) par une première suite de nombres binaires (Di) s'effectue au rythme de la fréquence de cadence.

3. Dispositif suivant la revendication 1, caractérisé par le fait qu'en aval du groupe de premiers additionneurs (ADᵢ) est branché au moins un autre groupe d'additionneurs (ZAᵢ), les additionneurs d'un tel autre groupe possédant des première et seconde entrées respectives pour des bits de sommes intermédiaires et des bits de report de même rang du groupe, branché respectivement directement en amont, d'additionneurs ainsi que de sorties de sommes et de report pour la délivrance de bits de sommes intermédiaires et de bits de report au groupe, qui est respectivement branché en aval, d'additionneurs ou, dans le cas du dernier autre groupe, au dispositif additionneur (AS), que d'autres mémoires intermédiaires (33',37') sont insérées entre les sorties des additionneurs du dernier autre groupe et le dispositif additionneur, que les branches récursives du circuit s'étendent depuis les sorties des additionneurs du dernier autre groupe, en passant par les autres mémoires intermédiaires (33' à 37') pour aboutir aux première et seconde entrées des premiers additionneurs (ADᵢ), que les additionneurs de l'autre groupe respectif possèdent des troisièmes entrées respectives, qui sont occupées par les autres suites, associées individuellement aux groupes, de nombres binaires (Ei), que les circuits logiques (23',27') sont branchés en aval des sorties des additionneurs (ZAᵢ) du dernier autre groupe, que les autres mémoires intermédiaires sont commandées de façon cadencée par des impulsions de cadence d'une fréquence de cadence prédéterminée, et que l'occupation des troisièmes entrées des additionneurs des autres groupes s'effectue avec les autres suites de nombres binaires (Ei) respectivement au rythme de la fréquence de cadence.

4. Dispositif suivant la revendication 2, caractérisé par le fait que les premières entrées des premiers additionneurs (ADᵢ) sont raccordées respectivement aux premières mémoires intermédiaires (33,34,35), utilisées pour la délivrance des premiers bits de sommes intermédiaires, des mêmes premiers additionneurs et les secondes entrées des premiers additionneurs (ADᵢ) sont raccordées respectivement aux premières mémoires intermédiaires (36,37) utilisées pour la délivrance de premiers bits de report, de premiers additionneurs possédant le rang immédiatement inférieur, ou qu'est réalisée une association, qui diffère de cela, des premiers additionneurs aux premières mémoires intermédiaires, et selon laquelle les rangs des premiers additionneurs, qui sont chargés côté entrée par les bits de sommes intermédiaires et les bits de report, diffèrent respectivement d'un nombre de positions constant par rapport à l'association indiquée.

5. Dispositif suivant la revendication 3, caractérisé par le fait que les premières entrées des premiers additionneurs (ADᵢ) sont raccordées aux autres mémoires intermédiaires (33',34',35'), utilisées pour la délivrance des bits de sommes intermédiaires, d'additionneurs (ZAᵢ) possédant le même rang dans le dernier autre groupe, et que les secondes entrées des premiers additionneurs (ADᵢ) sont raccordées respectivement aux autres mémoires intermédiaires (36',37'), utilisées pour la délivrance des bits de report d'additionneurs (ZAᵢ) possédant le rang immédiatement inférieur dans le dernier autre groupe, ou qu'est réalisée une association, qui diffère de cela, des premiers additionneurs aux autres mémoires intermédiaires, et selon laquelle les rangs des premiers additionneurs chargés côté entrée par les bits de sommes intermédiaires et les bits de report, diffèrent respectivement d'un nombre de positions constant par rapport à l'association indiquée.

6. Dispositif suivant la revendication 1, caractérisé par le fait que, lors de l'apparition d'un signal de dépassement de capacité positif, tous les bits du mot de report de saturation possèdent la valeur 0, les deux bits de poids maximum du mot de somme intermédiaire de saturation possèdent la valeur 0 et les autres bits de ce mot possèdent la valeur 1.

7. Dispositif suivant la revendication 1, caractérisé par le fait que lors de l'apparition d'un signal de dépassement de capacité négatif, tous les bits du mot de report de saturation possèdent la valeur 0, les deux bits de poids maximum du mot de somme intermédiaire de saturation possèdent la valeur 1 et les autres bits de ce mot possèdent la valeur 0.

8. Dispositif suivant la revendication 1, caractérisé par le fait que le décodeur comporte une première porte ET (44), dont les entrées sont raccordées aux deux premières entrées du premier additionneur (ADₙ₋₁) de rang maximum, qu'il est prévu une porte NON-ET (46), dont les entrées sont raccordées aux deux premières entrées du premier additionneur (ADₙ₋₂) possédant le rang maximum en second, qu'il est prévu une première porte NON-OU (45) branchée en parallèle, côté entrée, avec la première porte ET (44), et une première porte OU (47), qui est branchée en parallèle, côté entrée, avec la seconde porte NON-ET (46), que les sorties de la première porte ET et de la porte NON-ET (44,46) sont raccordées aux entrées d'une seconde porte ET (48), que les sorties de la porte NON-ET (45) et de la première porte OU (47) sont raccordées aux entrées d'une troisième porte ET (49), que la sortie de la seconde porte ET (46) est raccordée par l'intermédiaire d'un premier inverseur (53) à une sortie (42) d'un décodeur pour un signal de dépassement de capacité négatif inverse, que la sortie de la troisième porte ET (49) est raccordée par l'intermédiaire d'un second inverseur (52) à une sortie (41) du décodeur pour un signal de dépassement de capacité positif inverse, que les sorties des seconde et troisième portes ET (48,49) sont raccordées aux entrées d'une seconde porte OU (50) et que la sortie de cette dernière porte est raccordée directement à une sortie (40) du décodeur pour un signal de dépassement de capacité général et, par l'intermédiaire d'un troisième inverseur (52) à une sortie (40') du décodeur pour le signal de dépassement de capacité général inverse.

9. Dispositif suivant l'une des revendications 1 à 8, caractérisé par le fait que les circuits logiques, qui réalisent l'interruption des mots de transmission et le raccordement des mots de transmission de saturation, sont constitués chacun par deux transistors de commutation à effet de champ possédant des types de canaux différents et dont les bornes de source sont raccordées à l'entrée du circuit logique et les bornes de drain sont raccordées à la sortie du circuit logique, la grille du premier de ces transistors étant chargée par le signal de dépassement de capacité général et la grille de l'autre transistor étant chargée par le signal de dépassement de capacité général inverse, et que la sortie (56) du circuit logique est raccordée, par l'intermédiaire d'un autre transistor de commutation à effet de champ (57), dont la grille est commandée par le signal de dépassement de capacité général, à une borne (58) placée au potentiel de référence.

10. Dispositif suivant l'une des revendications 1 à 9, caractérisé par le fait que l'interruption des mots de sommes intermédiaires et le raccordement des circuits logiques formant les mots de sommes intermédiaires de saturation sont constitués respectivement par deux autres transistors de commutation à effet de champ (58a,59) possédant des types de canaux différents et dont les bornes de source sont raccordées à une entrée du circuit logique et les bornes de drain sont raccordées à une sortie du circuit logique, la grille de ces derniers transistors recevant le signal de dépassement de capacité général et la grille de l'autre transistor recevant le signal de dépassement de capacité général inverse, que la sortie (60) du circuit logique est raccordée par l'intermédiaire d'un premier circuit série formé de transistors de commutation à effet de champ possédant un premier type de canal (61,62) à une borne (63) qui est raccordée à une tension d'alimentation, et est raccordée, par l'intermédiaire d'un autre circuit série formé de deux transistors de commutation à effet de champ (64,65) possédant un autre type de canal, à une borne (66), qui est placée au potentiel de référence, et que respectivement l'un des transistors de commutation à effet de champ des premier et second circuits série est commandé par le signal de dépassement de capacité positif ou le signal de dépassement de capacité négatif, tandis que l'autre transistor d'un circuit série est commandé par le signal de dépassement de capacité général et l'autre transistor de l'autre circuit série est commandé par le signal de dépassement de capacité général inverse.

11. Utilisation d'un dispositif suivant la revendication 2, dans un filtre numérique, caractérisé par le fait que les premiers additionneurs (ADᵢ) sont utilisés pour l'addition de mots de sommes intermédiaires et de mots de report, envoyés par l'intermédiaire d'une boucle récursive (70,72) du filtre numérique, à des valeurs d'amplitude numérisées, échantillonnées, envoyées par l'intermédiaire des troisièmes entrées des premiers additionneurs (ADᵢ), d'un signal d'entrée (Di) du filtre numérique et possèdent à cet effet des accumulateurs, les mémoires intermédiaires (33 à 37), qui sont utilisées pour la délivrance des premiers bits de sommes intermédiaires et les premiers bits de report, formant un étage de retardement (69), et que le dispositif additionneur (AS) est utilisé pour la formation des valeurs d'amplitude numérisées des signaux d'entrée filtrés (Di').

12. Utilisation d'un dispositif suivant les revendications 3 et 11, comportant un seul autre groupe d'additionneurs, dans un filtre numérique, caractérisé par le fait que les premiers additionneurs (ADᵢ) et les additionneurs (ZAᵢ) de l'autre groupe sont utilisés pour réaliser l'addition de mots de sommes intermédiaires et de mots de report, envoyés par l'intermédiaire d'une boucle récursive (72) à un filtre numérique de second ordre aux deux entrées des premiers additionneurs (ADᵢ), à des mots de sommes intermédiaires et des mots de report des accumulateurs des premiers additionneurs (ADᵢ), envoyés par l'intermédiaire des troisièmes entrées des premiers additionneurs (ADᵢ) et par l'intermédiaire des troisièmes entrées des additionneurs (ZAᵢ), les mémoires intermédiaires (23' à 27') utilisées pour la délivrance des mots de sommes intermédiaires et des mots de report des additionneurs (ZAᵢ) formant un étage de retardement (71), et que le dispositif additionneur (AS) sert à former les valeurs d'amplitude numérisées du signal d'entrée filtré (D').

13. Dispositif suivant l'une des revendications 2 à 12, caractérisé par le fait que les mémoires intermédiaires sont réalisées sous la forme d'étages de registres à décalage et sont réalisées de préférence sous la forme de bascules bistables maître-esclave.
